# EUROPEAN PATENT SPECIFICATION

(11) **EP 1 621 413 B1**
(45) Date of publication and mention of the grant of the patent: **12.09.2007**
(21) Application number: 05015018.4
(22) Date of filing: 11.07.2005
(51) Int. Cl.: B60R 21/16

(54) **Igniter assembly**
Zünder
Allumeur

(30) Priority: 26.07.2004 JP 2004217039
(43) Date of publication of application: 01.02.2006
(73) Proprietor: DAICEL CHEMICAL INDUSTRIES, LTD., Sakai-shi, Osaka (JP)
(72) Inventor: Kuruda, Takao, Himeji-shi Hyogo (JP); Oda, Shingo, Himeji-shi Hyogo (JP); Yano, Shigeaki, Himeji-shi Hyogo (JP)
(74) Representative: Grünecker, Kinkeldey, Stockmair & Schwanhäusser Anwaltssozietät

(56) References cited:
- AT-B- 412 127
- DE-A1- 4 141 908
- DE-U1- 20 020 099

## Description

The present invention relates to an igniter assembly according to the preamble of claim 1, a method for manufacturing the same and a gas generator for an air bag which uses this igniter assembly.

An igniter assembly of the above type is known from DE 200 20 099 U1.

When attaching an electric igniter to a gas generator for an air bag, a method of embedding the igniter into a metallic collar and then attaching the igniter to the gas generator in this state is typically employed. To provide insulation in this case, an igniter assembly, in which the periphery of the igniter is wrapped in an insulation sheet, is fitted together with the metallic collar.

This type of igniter assembly is manufactured by placing the igniter in a mold, injecting molten resin into the mold, and cooling/hardening the resin such that the igniter and the collar are integrated with each other. However, volume shrinkage occurs when the molten resin hardens, and this may produce gaps between the resin and the insulation sheet. When these gaps occur, moisture in the outside air may infiltrate through the gaps.

In US-B No. 5,131,679, a metallic cup 158 is covered by a thin plastic film 170, and an end portion 172 of the film 170 is provided inside a plastic material 150.

In US-B No. 5,556,132, an electrically insulating material 192 is disposed on a cup 106, thereby preventing the cup 106 from being grounded. During manufacture, the members are assembled, and finally a plastic material 104 is poured in.

In all of the prior art described above, structures are disclosed in which an end portion of an insulating member (film) exists within a plastic mold, but none of the prior art refers to the possibility such that gaps occur at the contact portions between the insulating material (film) and plastic mold, or to methods for preventing these gaps.

### Summary of the Invention

An aspect of the present invention is to provide an igniter assembly which can prevent the infiltration of moisture in the outside air, thereby ensuring long-term operational stability, a manufacturing method for the igniter assembly, and a gas generator for an air bag which uses the igniter assembly.

As means of achieving this object, the present invention provides the igniter assembly according to claim 1, said igniter assembly comprising: an igniter having a metallic header to which at least one conductive pin is fixed, a heat generating body provided on the metallic header in electrical contact with the at least one conductive pin, an ignition charge contacting the heat generating body, which is charged into a metallic cup placed over the metallic header, and a resin sheet covering the entire outer surface of the metallic cup; and a resin molded body that is injection-molded so as to surround a part of the igniter,
wherein the resin molded body encloses a part of the resin sheet and surrounds the igniter such that the conductive pins are capable of electrification, and the resin sheet and resin molded body are integrated at a contact portion between the resin molded body and resin sheet.

The resin molded body is typically molded into a shape which matches the interior shape of a metallic collar into which the igniter assembly is embedded. However, as described in the "Description of the Related Art" section, during cooling and hardening, volume shrinkage is inevitable, and hence gaps may appear between the igniter and resin molded body. When the resin molded body is injection-molded to contact the metallic header and conductive pins, and then cooled and hardened, gaps may also appear between these components.

In the present invention, however, the resin molded body is in direct contact with the resin sheet, and the resin molded body and resin sheet are integrated with each other at the contact portion. Therefore, no gaps exist between the resin molded body and resin sheet. Moreover, since the resin sheet is integrated with the resin molded body, the resin sheet never becomes dislodged from the resin molded body. Here, " integrated" signifies that the resin molded body and resin sheet remain fused at the contact portion therebetween when cooled and hardened.

The resin molded body and resin sheet are integrated during the manufacturing process by injecting molten resin, which is to serve as the resin molded body, into contact with the resin sheet such that the resin sheet melts at the point of contact with the molten resin. Then, when the molten resin of the resin molded body is cooled and hardened, the resin sheet that is fused thereto also cools and hardens. As a result of this manufacturing process, no gaps exist between the resin molded body and resin sheet.

In the igniter assembly of the present invention, the resin used as the resin sheet preferably has a melting point that is not higher than (is equal to or lower than) the melting point of the resin used as the resin molded body, and preferably has an electrical insulation property.

It is believed that when the melting point of the resin used as the resin sheet is not higher than the melting point of the resin used as the resin molded body (by approximately 10°C, for example), and the resin molded body is melted at a temperature that is not lower than (is equal to or higher than) melting point of the resin sheet and then injected (with the temperature of the resin during injection preferably set equal to or higher than the melting point of the resin sheet), the resin sheet and resin molded body become fused.

However, to integrate the resin sheet and resin molded body more reliably and prevent excessive thermal deformation of the resin sheet, the melting point of the resin used as the resin sheet is preferably equal to or lower than the melting point of the resin used as the resin molded body, and more preferably between 30°C and 70°C lower than the melting point of the resin used as the resin molded body.

By providing the resin sheet with an electric insulation property, situations in which an electric current flows from the metallic cup into another member (another member of the device to which the igniter assembly is applied) such that normal operations can no longer be performed are prevented.

As other means for achieving the object, the present invention provides a manufacturing method for the igniter assembly described above, comprising the steps of: assembling an igniter having a metallic header to which at least one conductive pin is fixed, a heat generating body provided on the metallic header in electric contact with the at least one conductive pin, and an ignition charge contacting the heat generating body, which is charged into a metallic cup placed over the metallic header; covering the entire outer surface of the metallic cup of the igniter with a resin sheet; fitting the igniter covered with the resin sheet into a mold having a predetermined shape and a resin injection hole; and injecting a molten resin serving as the resin of the resin molded body through the resin injection hole such that the molten resin contacts and becomes fused to at least a part of the resin sheet, and then cooling the molten resin.

The present invention also provides a gas generator for an air bag, comprising the igniter assembly according to the present invention.

The igniter assembly of the present invention may be applied to well-known various gas generators for air bags such as an air bag gas generator for a driver side or a front passenger side. The igniter assembly may also be applied to various actuators such as a seatbelt pretensioner, an automatic flash distinguisher or suppresser, a circuit breaker, and a rocket motor.

In the igniter assembly of the present invention, the resin sheet and resin molded body are integrated with each other such that no gaps exist therebetween, and hence moisture infiltration is prevented. As a result, long-term operational reliability is ensured. Moreover, since the resin sheet and resin molded body are integrated, the resin sheet itself does not become dislodged from the igniter.

### Brief Description of the Drawings

Fig. 1 is a schematic sectional view in an axial direction of an igniter assembly.
Fig. 2 is an illustrative view of a manufacturing process of the igniter assembly.
Fig. 3 is an illustrative view of the manufacturing process of the igniter assembly.

### Detailed Description of the Invention

### (1) Igniter assembly

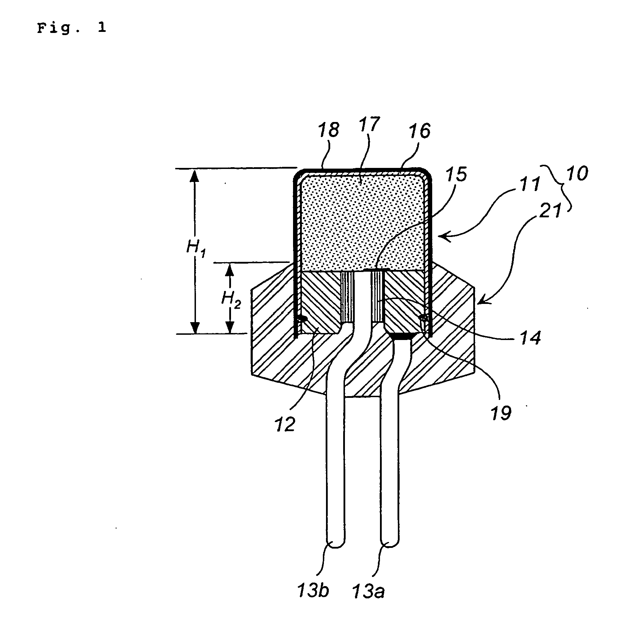

An igniter assembly will be described using Fig. 1. Fig. 1 is a schematic sectional view in the axial direction of an igniter assembly.

An igniter assembly 10 comprises an igniter 11 having a metallic header and so on, and a resin molded body 21 surrounding a part of the igniter 11.

The metallic header 12 holds two conductive pins 13a, 13b. The end portion of the conductive pin 13a is fixed to the metallic header 12, and the end portion of the conductive pin 13b is buried within and fixed to an insulation portion (glass portion) 14 attached integrally to the metallic header 12.

A heat generating body 15 is provided on the surface of the metallic header 12. One end of the heat generating body 15 contacts the conductive pin 13b, and, bridging the glass portion 14, the other end contacts the surface of the metallic header 12. A metal coil or metal wire which generates heat easily, such as a nichrome wire, for example, may be used as the heat generating body 15.

A metallic cup 16 is placed over the metallic header 12. The metallic cup 16 covers the entire peripheral surface of the metallic header 12, and the metallic header 12 and metallic cup 16 are welded together at a welded portion 19.

An ignition charge 17 is charged into the metallic cup 16. The ignition charge 17 and heat generating body 15 contact each other tightly. Zirconium/potassium perchlorate that is used generally or the like may be used as the ignition charge.

The entire outer surface of the metallic cup 16 is covered by a cup-form resin sheet 18 having the same shape and the same size as (or a slightly larger size than) the metallic cup 16.

The resin molded body 21 encloses the lower end side of the metallic sheet 18, and covers the igniter 11 such that the conductive pins 13a, 13b are capable of electrification. The resin molded body 21 is molded into a shape which matches the internal shape of a metallic collar so that the igniter assembly 10 can be embedded into the metallic collar.

The resin sheet 18 and resin molded body 21 are integrated at a contact portion therebetween such that no gaps exist between the two members. To enhance the joining strength and ensure moisture resistance between the resin sheet 18 and resin molded body 21, the ratio of an overall height H₁ of the resin sheet 18 and a contact portion H₂ between the resin sheet 18 and resin molded body 21 is preferably within the range of 10% to 90% when the ratio is determined as (H₂×100)/H₁, and more preferably within the range of 30% to 70%.

The material of the resin sheet 18 preferably has a lower melting point than that of the material of the resin molded body 21 and an electric insulation property. Accordingly, nylon 12 (having a melting point of 170°C) may be used as the resin sheet 18, and nylon 6-12 (having a melting point of 212°C) may be used as the resin molded body 21. Alternatively, nylon 6, nylon 12, nylon 66, and nylon 6-10 may be used as the resin molded body or resin sheet

In the igniter assembly 10, the resin sheet 18 and resin molded body 21 are integrated at the contact portion, and no gaps exist in the contact portion. Hence, moisture in the outside air does not infiltrate through the contact portion between the resin sheet 18 and resin molded body 21, ensuring long-term operational reliability.

Moreover, the resin sheet does not become detached from the metallic cup 16. Even if a gap is formed between the resin molded body 21 and the metallic header 12 or conductive pins 13a, 13b, moisture infiltration is prevented as long as the resin sheet 18 and resin molded body 21 are in close contact (such that gas is prevented from infiltrating therebetween).

### (2) Manufacturing method of igniter assembly

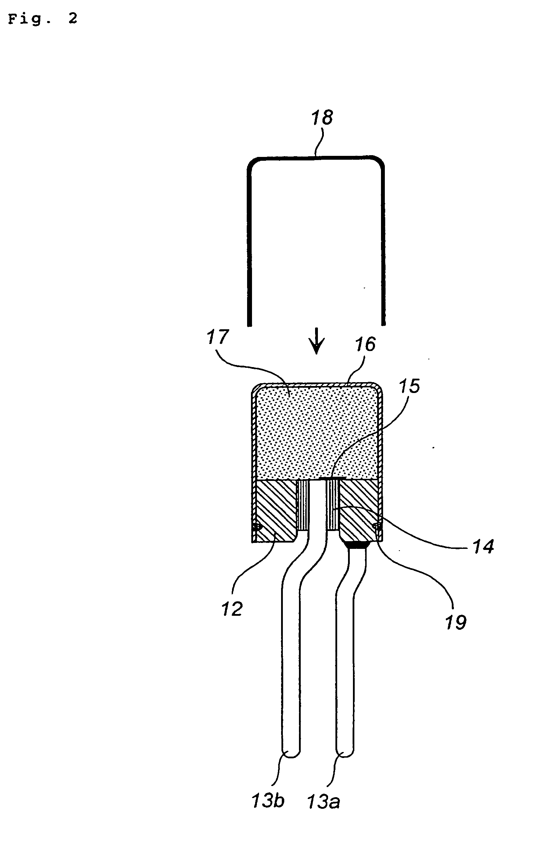

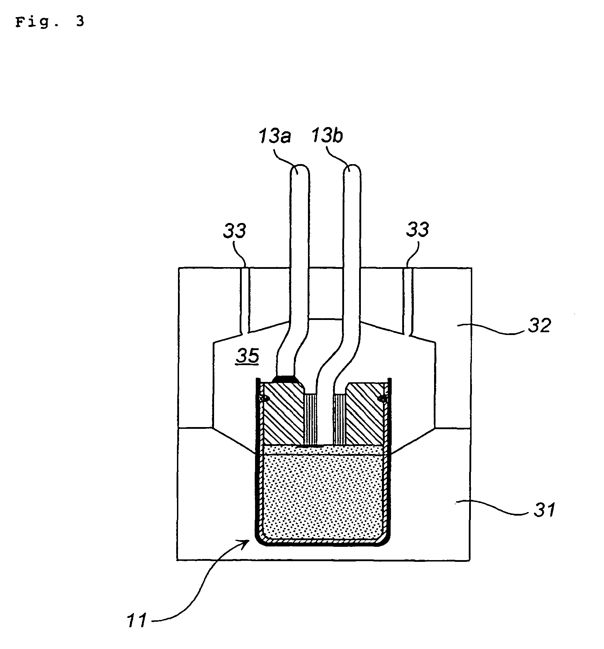

A manufacturing method for the igniter assembly will be described using Figs. 1 to 3. Figs. 2 and 3 are illustrative views of a manufacturing method for the igniter assembly.

First, the igniter 11 shown in Fig. 1 is assembled without the resin sheet (made of nylon 12 having a melting point of 170°C, for example) 18. In this case, the igniter 11 without the resin sheet 18 is a universally known device.

Next, as shown in Fig. 2, the resin sheet 18 is placed over the entire outer surface of the metallic cup 16 of the igniter 11. There are no particular limitations on the shape of the resin sheet 18, but in terms of workability, the resin sheet 18 preferably has the same shape and the same size as the metallic cup 16, or a slightly larger size than the metallic cup 16, as shown in the drawing.

Next, as shown in Fig. 3, the igniter 11 is fitted into a lower mold 31 having a predetermined shape, whereupon an upper mold 32 having a predetermined shape is fitted onto the lower mold 31. At this time, as shown in the drawing, a part of the resin sheet 18 (a length part corresponding to H₂ in Fig. 1) does not contact the lower mold 31, but instead is exposed within an interior space 35 surrounded by the lower mold 31 and upper mold 32. Note that a part of the conductive pins 13a, 13b protrudes to the outside through the upper mold 32 as shown in the drawing.

Next, molten resin (nylon 6-12 having a melting point of 212°C, for example) serving as the resin for forming the resin molded body 21 is injected into the interior space 35 through a plurality of molten resin injection holes 33 formed in the upper mold 32. At this time, the molten resin contacts a part of the resin sheet 18, causing the contacted part of the resin sheet 18 to melt such that the molten resin and resin sheet 18 are fused at this contact portion. Further, the injection temperature of the resin during injection to the interior of the lower mold 31 and upper mold 32 is set between 30°C and 70°C higher than the melting point of the resin sheet 18.

Heat also affects the remaining portion of the resin sheet 18 that does not contact the molten resin (the part corresponding to H₁-H₂ in Fig. 1), and also affects the metallic cup 16. This heat softens the remaining portion of the resin sheet 18 such that the resin sheet 18 is adhered tightly to the metallic cup 16.

When the igniter assembly 10 is left to cool at room temperature with the molten resin and resin sheet 18 fused together, the cooling process hardens the fused molten resin and resin sheet such that the two components are integrated at the contact portion. The lower mold 31 and upper mold 32 are then removed, whereby the igniter assembly 10 shown in Fig. 1 is obtained.

### (3) Gas generator for use in air bag

The igniter assembly 10 shown in Fig. 1 may be incorporated as an electric igniter into a gas generator for an air bag with a part of the resin molded body 21 embedded in a metallic collar. At this time, a connector is connected to the conductive pins 13a, 13b, and a lead wire extending from the connector is connected to a battery.

During an operation, an electric current supplied from the battery flows from the conductive pin 13b to the conductive pin 13a such that the heat generating body 15 generates heat. This heat causes the ignition charge 17 contacting the heat generating body 15 to ignite and burn. The ignition energy generated through the ignition and burning of the ignition charge 17 either ignites and burns a gas generating agent, or burns a transfer charge which then causes the gas generating agent to ignite and burn. As a result, gas is generated and the air bag is inflated.

Note that when the resin sheet 18 is not provided, current may flow from the metallic cup 16 to the gas generator side during electrification (when the electrification sequence of the conductive pins may reverse), but when the resin sheet 18 having an electric insulation property is provided, the possibility of this situation arising is eliminated.

Further, if the metallic cup 16 contacts another member when the igniter assembly 10 is incorporated into the gas generator, electric conduction may occur between the metallic cup 16 and the other member, but by covering the metallic cup 16 with the resin sheet 18, this situation is prevented.

There are no particular limitations on the air bag gas generator to which the igniter assembly 10 can be applied, and any well-known air bag gas generator may be used.

This invention thus described, it will be obvious that the same may be varied in many ways, such variations are not to be regarded as a departure from the spirit and scope of the invention, and all such modification as would be obvious to one skilled in the art are intended to be included within the scope of the following claims.

## Claims

1. An igniter assembly (10) comprising:
an igniter (11) having a metallic header (12) to which at least one conductive pin (13a, 13b) is fixed, a heat generating body (15) provided on the metallic header (12) in electrical contact with the at least one conductive pin (13a, 13b), an ignition charge (17) contacting the heat generating body (15), **characterized by** the ignition charge (17) is charged into a metallic cup (16) placed over the metallic header (12), and a resin sheet (18) covering the entire outer surface of the metallic cup (16); wherein
a resin molded body (21) is injection-molded so as to surround a part of the igniter (11),
wherein the resin molded body (21) encloses a part of the resin sheet (18) and surrounds the igniter (11) such that the conductive pins (13a, 13b) are capable of electrification, and the resin sheet (18) and resin molded body (21) are integrated at a contact portion (H₂) between the resin molded body (21) and resin sheet (18).

2. The igniter assembly(10) as claimed in claim 1, wherein the resin used as the resin sheet (18) has a melting point that is not higher than the melting point of the resin used as the resin molded body (21), and has an electrical insulation property.

3. A method of manufacturing an igniter assembly (10) as claimed in claim 1 or 2, comprising the steps of:
assembling an igniter (11) having a metallic header (12) to which at least one conductive pin (13a, 13b) is fixed, a heat generating body (15) provided on the metallic header (12) in electric contact with the at least one conductive pin (13a, 13b), and an ignition charge (17) contacting the heat generating body (15), which is charged into a metallic cup (16) placed over the metallic header (12);
covering the entire outer surface of the metallic cup (16) of the igniter (11) with a resin sheet (18);
fitting the igniter (11) covered with the resin sheet (18) into a mold(31, 32) having a predetermined shape and a resin injection hole (33); and
injecting a molten resin serving as the resin of the resin molded body (21) through the resin injection hole(33) such that the molten resin contacts and becomes fused to at least a part of the resin sheet (18), and then cooling the molten resin.

4. A gas generator for an air bag, comprising the igniter assembly (10) as claimed in claim 1 or 2.

## Patentansprüche

1. Eine Zündanordung (10), umfassend:
eine Zündvorrichtung (11) mit einem Kopfabschnitt (12) aus Metall, an welchem zumindest ein konduktiver Stift (13a, 13b) fixiert ist, einen Hitze erzeugenden Körper (15), der an dem Kopfabschnitt aus Metall in einem elektrischen Kontakt mit dem zumindest einen konduktiven Stift (13a, 13b) bereitgestellt ist, eine Zündladung (17), welche sich mit dem Hitze erzeugenden Körper (15) in Kontakt befindet, **dadurch gekennzeichnet, dass** die Zündladung (17) in eine Kappe (16) aus Metall eingefüllt ist, die über dem Kopfabschnitt (12) aus Metall angeordnet ist, wobei eine Schicht (18) aus Kunststoff die gesamte äußere Oberfläche der Kappe (16) aus Metall abdeckt; wobei ein aus Kunststoff geformten Körper (21) derart spritzgegossen ist, um einen Teil der Zündvorrichtung (11) zu umgeben, wobei der aus Kunststoff geformte Körper (21) einen Teil der Schicht (18) aus Kunststoff einschließt und die Zündvorrichtung (11) derart umgibt, dass die konduktiven Stifte (13a, 13b) zur Elektrisierung fähig sind, wobei die Schicht (18) aus Kunststoff und der aus Kunststoff geformte Körper (21) an einem Kontaktabschnitt (H₂) zwischen dem aus Kunststoff geformten Körper (21) und der Schicht (18) aus Kunststoff integriert sind.

2. Die Zündanordnung (10) nach Anspruch 1, wobei der für die Schicht (18) aus Kunststoff verwendete Kunststoff einen Schmelzpunkt aufweist, der nicht höher ist als der Schmelzpunkt des für den aus Kunststoff geformten Körper (21) verwendeten Kunststoffs, und eine elektrisch isolierende Eigenschaft aufweist.

3. Ein Verfahren zum Herstellen einer Zündanordnung (10) nach Anspruch 1 oder 2, umfassend die Schritte: Zusammenfügen einer Zündvorrichtung (11) mit einem Kopfabschnitt (12) aus Metall, an welchem zumindest ein konduktiver Stift (13a, 13b) fixiert ist, eines Hitze erzeugenden Körpers (15), der an dem Kopfabschnitt (12) aus Metall in einem elektrischen Kontakt mit dem zumindest einem konduktiven Stift (13a, 13b) bereitgestellt ist, und einer Zündladung (17), welche sich mit dem Hitze erzeugenden Körper (15) in Kontakt befindet und welche in eine Schale (16) aus Metall eingefüllt ist, die über dem Kopfabschnitt (12) aus Metall angeordnet ist; Abdecken der gesamten äußeren Oberfläche der Schale (16) aus Metall der Zündvorrichtung (11) mit einer Schicht (18) aus Kunststoff; Einfügen der Zündvorrichtung (11), die mit der Schicht (18) aus Kunststoff abgedeckt ist, in eine Form (31,32), die eine vorgegebene Gestalt und eine Öffnung (33) zum Einspritzen von Kunststoff aufweist; und Einspritzen eines geschmolzenen Kunststoffs, der als der Kunststoff für den aus Kunststoff geformten Körper (21) dient, durch die Öffnung (33) zum Einspritzen von Kunststoff, so dass der geschmolzene Kunststoff mit zumindest einem Teil der Schicht (18) aus Kunststoff in Kontakt gelangt und verschmolzen wird, und Abkühlen des geschmolzenen Kunststoffs im Anschluss daran.

4. Ein Gasgenerator für einen Airbag, umfassend die Zündanordnung (10) nach Anspruch 1 oder 2.

## Revendications

1. Ensemble d'allumage (10) comprenant : un allumeur (11) ayant un socle métallique (12) sur lequel au moins une première broche conductrice (13a, 13b) est fixée, un corps générant de la chaleur (15) prévu sur le socle métallique (12) en contact électrique avec la au moins première borne conductrice (13a, 13b), une charge d'allumage (17) entrant en contact avec le corps générant de la chaleur (15), **caractérisé en ce que** la charge d'allumage (17) est chargée dans une coupelle métallique (16) placée sur le socle métallique (12), et une feuille de résine (18) recouvrant toute la surface extérieure de la coupelle métallique (16) ; dans lequel un corps moulé en résine (21) est moulé par injection de manière à entourer une partie de l'ensemble d'allumage (11), dans lequel le corps moulé en résine (21) englobe une partie de la feuille de résine (18) et entoure l'ensemble d'allumage (11) de telle manière que les broches conductrices (13a, 13b) sont susceptibles d'être d'alimentées électriquement, et la feuille de résine (18) et le corps moulé en résine (21) sont intégrés à une partie de contact (H2) entre le corps moulé en résine (21) et la feuille de résine (18)

2. Ensemble d'allumage (10) selon la revendication 1, dans lequel la résine utilisée pour la couche de résine (18) a un point de fusion qui n'est pas supérieur au point de fusion de la résine utilisée pour le corps moulé en résine (21), et a une propriété d'isolement électrique.

3. Procédé de fabrication d'un ensemble d'allumage (10) selon la revendication 1 ou 2, comprenant les étapes consistant à : monter un allumeur (11) ayant un socle métallique (12) sur lequel au moins une première broche conductrice (13a, 13b) est fixée, un corps générant de la chaleur (15) prévu sur le socle métallique (12) en contact électrique avec la au moins première broche conductrice (13a, 13b), et une charge d'allumage (17) entrant en contact avec le corps générant de la chaleur (15), qui est chargée dans une coupelle métallique (16) placée sur le socle métallique (12) ; recouvrir toute la surface extérieure de la coupelle métallique (16) de l'allumeur (11) par une feuille de résine (18) ; introduire l'allumeur (11) recouvert de la feuille de résine (18) dans un moule (31, 32) ayant une forme prédéterminée et un orifice d'injection de résine (33) ; et injecter une résine fondue servant de résine du corps moulé en résine (21) à travers l'orifice d'injection de résine (33) de telle sorte que la résine fondue entre en contact et s'agglomère avec au moins une partie de la feuille de résine (18), puis refroidir la résine fondue.

4. Générateur de gaz destiné à un coussin de sécurité gonflable, comprenant l'ensemble d'allumage (10) selon la revendication 1 ou 2.
